# EUROPÄISCHE PATENTSCHRIFT

(11) **EP 2 551 175 B1**
(45) Veröffentlichungstag und Bekanntmachung des Hinweises auf die Patenterteilung: **04.10.2017**
(21) Anmeldenummer: 12177954.0
(22) Anmeldetag: 26.07.2012
(51) Int. Cl.: B62D 61/12, B62D 63/06, G01S 13/92, G08G 1/017, G08G 1/054

(54) **Anhänger zur Verkehrsüberwachung**
Trailer for monitoring traffic
Remorque destinée à la surveillance du trafic

(30) Priorität: 27.07.2011 DE 102011052218
(43) Veröffentlichungstag der Anmeldung: 30.01.2013
(73) Patentinhaber: JENOPTIK Robot GmbH, 40789 Monheim am Rhein (DE)
(72) Erfinder: Schaufelberger, Martin, 8636 Wald (CH); Kellenberger, Andres, 8610 Uster (CH)
(74) Vertreter: Oehmke, Volker

(56) Entgegenhaltungen:
- AT-A4- 509 049
- US-A- 5 231 393
- US-A1- 2011 043 381

## Beschreibung

Die Erfindung betrifft einen Anhänger zur Verkehrsüberwachung, mit dem Verfahren zur Erfassung und Dokumentation von Rotlicht- und/oder Geschwindigkeitsverstößen durchführbar sind, wie sie gattungsgemäß aus der DE 10 2007 022 373 A1 und EP 2 048 515 A1 bekannt sind. Die US 2011/0043381 A1 offenbart den Oberbegriff des Anspruchs 1. Neben den stationär aufgestellten Verkehrsüberwachungssystemen sind die mobilen Verkehrsüberwachungseinrichtungen im Einsatz. Gegenüber den stationären Einrichtungen haben die mobilen Einrichtungen den Vorteil, dass sie an beliebigen Orten zu beliebigen Zeiten zur Überwachung eines Verkehrsraumes eingesetzt werden können. Die meisten neuen Überwachungssysteme sind volumenmäßig derart angewachsen, dass sie in einen PKW schon kaum mehr unterzubringen sind. Nachteilig ist auch, dass stets ein PKW mit dieser Technik blockiert wird.

Für die Anzeige von gemessenen Geschwindigkeiten werden mobile Anhängersysteme, wie mit der US 5,231,393 A offengelegt, an den unterschiedlichsten Orten zum Einsatz gebracht. Mit der AT 509 049 A4 wird ein land- und forstwirtschaftlicher Zugmaschinenanhänger offenbart, dessen Rahmen in der Höhe über Grund verstellbar ist.

Um Rotlicht- und/oder Geschwindigkeitsverstöße zu registrieren, sind derartige Einrichtungen nicht geeignet.

Der Erfindung liegt die Aufgabe zugrunde, eine Anordnung zu schaffen, die einfach an beliebigen Orten aufgebaut werden kann, so dass eine Erfassung und Dokumentation von Rotlicht- und/oder Geschwindigkeitsverstößen durchgeführt werden kann, wobei die Anordnung nicht in einem PKW platziert sein soll.

Erfindungsgemäß wird die Aufgabe mit einem Anhänger zur Verkehrsüberwachung enthaltend einen Aufbau und ein Fahrgestell mit Deichsel und Achse mit Rädern, dadurch gelöst, dass Mittel vorhanden sind, mit denen die Räder anheb- und absenkbar sind, so dass im abgesenkten Zustand der Anhänger fahrbereit ist und im angehobenen Zustand die Räder keinen Bodenkontakt aufweisen und somit der Anhänger auf der Erde steht, dass ein Gehäuseaufsatz mit zwei Einschüben am Aufbau vorhanden ist und die Einschübe bezüglich des Anhängers nach vorn bzw. nach hinten und gegenüber der Deichsel jeweils einen Winkel von kleiner 45° einschließend angeordnet sind, so dass bei Abstellung des Anhängers seitlich parallel zur Straße die Radarstrahlung unter einem Winkel α der Radarachse zur Fahrbahnrichtung von ebenfalls kleiner 45° erfolgt. Vorzugsweise wird ein Winkel von 30° gewählt. Ferner ist in dem Aufbau mindestens eine Anlage zur Erfassung und Dokumentation von Rotlicht- und/oder Geschwindigkeitsverstößen integrierbar angeordnet.

Vorteilhaft ist es, wenn die Deichsel nach dem Abkoppeln vom PKW am Einsatzort einklappbar ausgestaltet ist,.

Eine besonders vorteilhafte Ausgestaltung des Anhängers besteht darin, dass mindestens ein Einschub zur Aufnahme eines Radargerätes mit Radarantenne und mindestens einer Aufzeichnungseinheit konzipiert ist. Von Vorteil kann es sein, wenn im Einschub nur die Radarantenne und die Aufzeichnungseinheit platziert werden und die zur Erfassung und Dokumentation von Rotlicht- und/oder Geschwindigkeitsverstößen zugehörigen weiteren Bestandteile im Aufbau untergebracht werden.

Wenn in jedem Einschub ein Messsystem vorgesehen wird, dann können Messungen in beide Fahrtrichtungen gleichzeitig von dem einen Standort aus durchführt werden.

Eine weitere vorteilhafte Variation ergibt sich, wenn in einem Einschub ein komplettes Messsystem und in dem anderen Einschub nur eine Kamera installiert wird. Somit kann die Geschwindigkeit mit dem Messsystem von einem entgegenkommenden Fahrzeug ermittelt werden und bei Überschreitung wird mit der zum Messsystem im selben Einschub befindlichen Kamera ein Frontfoto bzw. eine Sequenz von Bildern erstellt. Zur Aufnahme der Heckansicht des Fahrzeugs wird dann die im anderen Einschub befindliche Kamera aktiviert.

Sämtliche Aufnahmesysteme können jeweils mit einer IR-Blitzeinrichtung gekoppelt werden, die dann im selben Einschub platziert werden.

Damit der Anhänger während des Einsatzes nicht ständig auf seinen Rädern steht, ist von Vorteil, diese zu entlasten. Dabei können teleskopierbare Stützfüße zum Einsatz gebracht werden, um den Anhänger auf diese zu stellen. Nachteilig ist dann allerdings wieder, dass damit der Anhänger unnötig hochgehoben wird. Die bessere Variante ist es, einen oder mehrere Pneumatik- oder Hydraulikzylinder derart anzuordnen, dass die Achse angehoben werden kann und somit der Aufsatz abgesenkt wird und der Anhänger auf diesem dann steht. Eine weitere vorteilhafte Variante ergibt sich, indem die Zylinder an die Achse angreifend derart angeordnet werden, dass dadurch die Achse gedreht werden kann und somit wiederum der Anhänger auf seinem Aufbau abgestellt wird. Da oftmals am Aufstellort Unebenheiten zu verzeichnen sind, ist es besonders vorteilhaft, den Absenkmechanismus mit den teleskopierbaren Stützfüßen zu kombinieren. Dadurch kann eine einfache Nivellierung des gesamten Anhängers erfolgen und außerdem kann dadurch der Aufbau geschont werden. Besonders vorteilhaft ist es, wenn die teleskopierbaren Stützfüße einzeln über eine Fernbedienung ansteuerbar sind, oder auch sich automatisch mit einem in Verbindung stehenden Nivellierelement selbst ausrichten.

Eine annähernd parallele Ausrichtung des Anhängers am Straßenrand genügt vollkommen um beispielsweise die in den Schriften DE 10 2007 022 373 A1 und EP 2 048 515 A1 veröffentlichten Verfahren durchzuführen, wenn derartige Radargeräte und zugehörige Kameras in den Einschüben untergebracht sind. Die vorgesehene Winkelstellung der Einschübe garantiert einen geforderten Aufstellwinkel (Radarachse zur Fahrbahn) von kleiner 45°. Ebenfalls kommt dem System entgegen, dass die Radarstrahlung mit einem relativ großen Öffnungswinkel (20° bis 40°) betrieben wird.

Die Erfindung soll nachfolgend anhand von Ausführungsbeispielen an Zeichnungen näher erläutert werden.

Hierzu zeigen:
- Fig. 1: eine schematische Darstellung des Anhängers von der Seite
- Fig. 2: eine schematische Darstellung des Anhängers von vorn
- Fig. 3: eine perspektivische Darstellung des Anhängers
- Fig. 4: eine weitere perspektivische Darstellung des Anhängers
- Fig. 5: eine schematische Darstellung des Anhängers von der Seite im abgesenkten Zustand

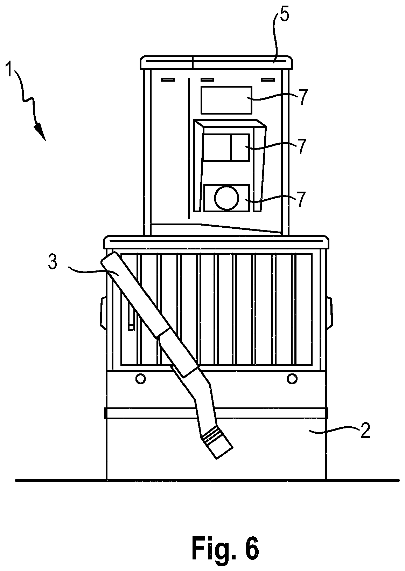

- Fig. 6: eine schematische Darstellung des Anhängers von vorn im abgesenkten Zustand
- Fig. 7: Draufsicht auf Achse
- Fig. 8: weitere Draufsicht auf Achse
- Fig. 9: weitere Draufsicht auf Achse
- Fig. 10: Fernbedienung für teleskopische Stützfüße
- Fig. 11: Anhänger im fahrbereiten Zustand
- Fig. 12: Anhänger im abgesetzten Zustand
- Fig. 13: weitere Ansicht auf Anhänger im abgesetzten Zustand

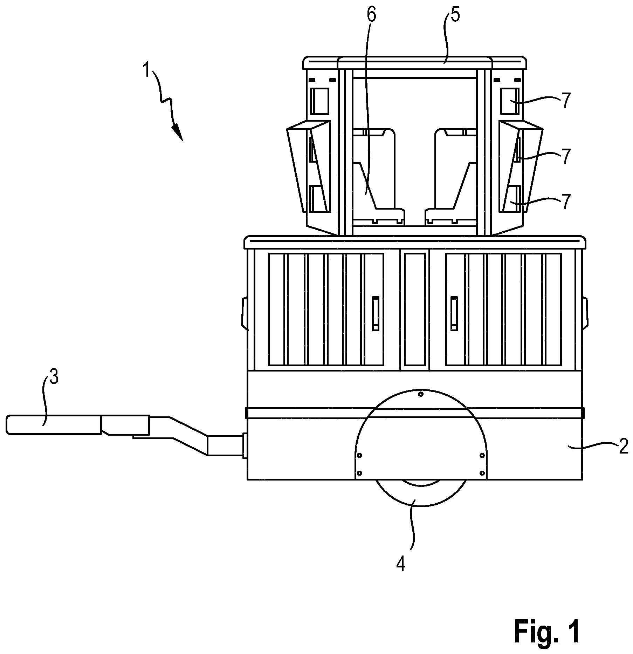

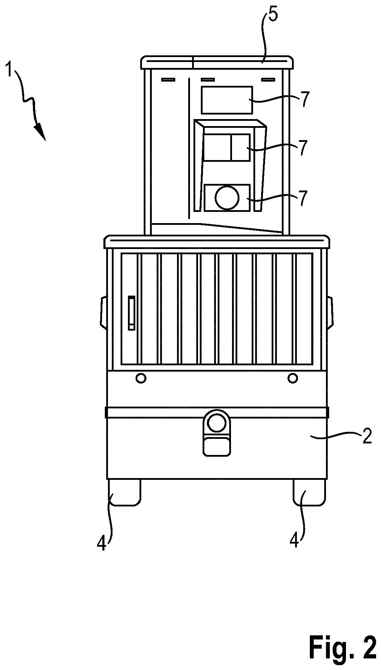

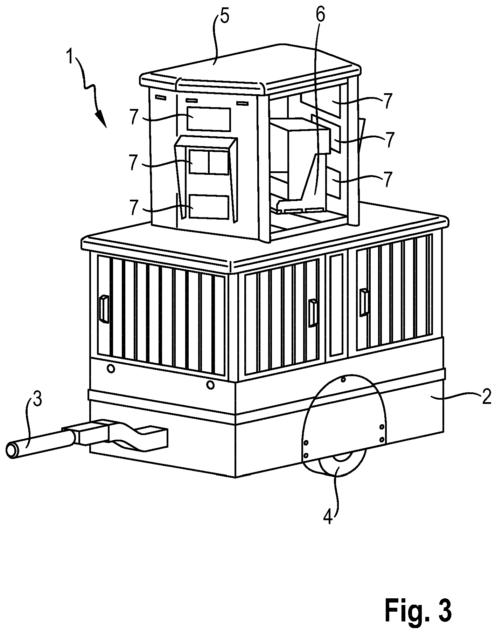

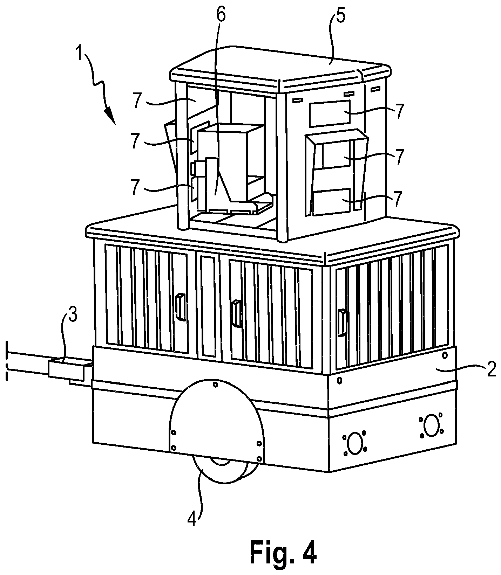

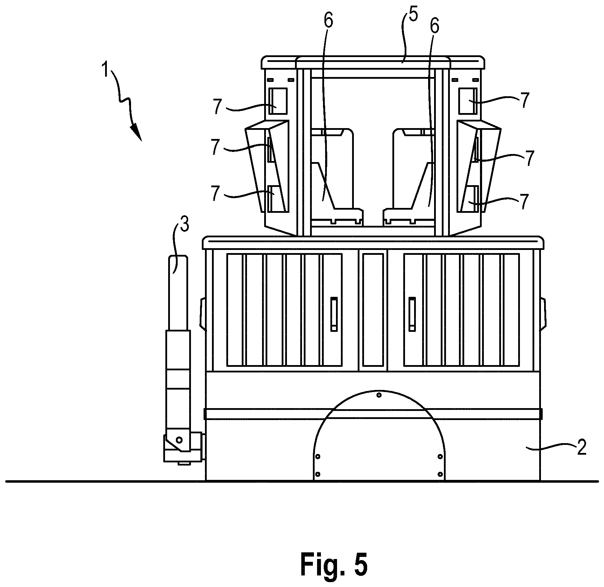

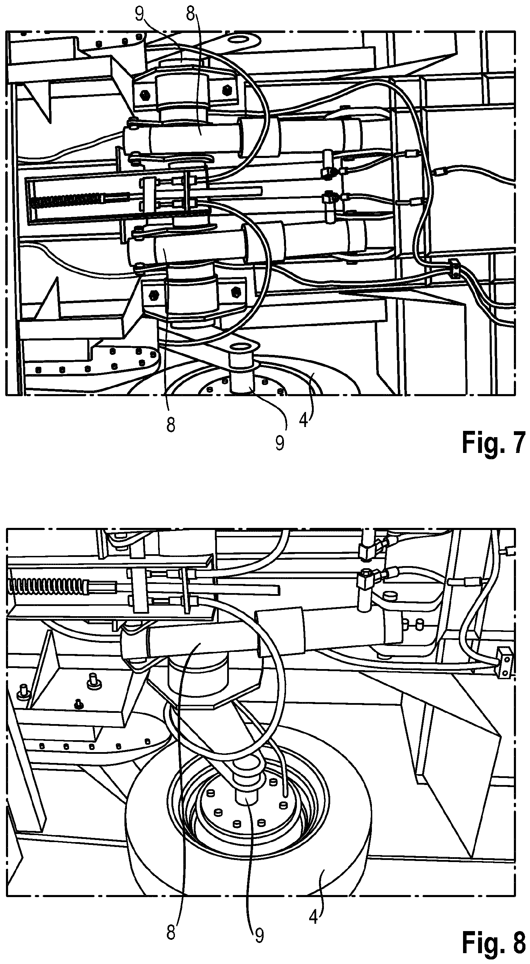

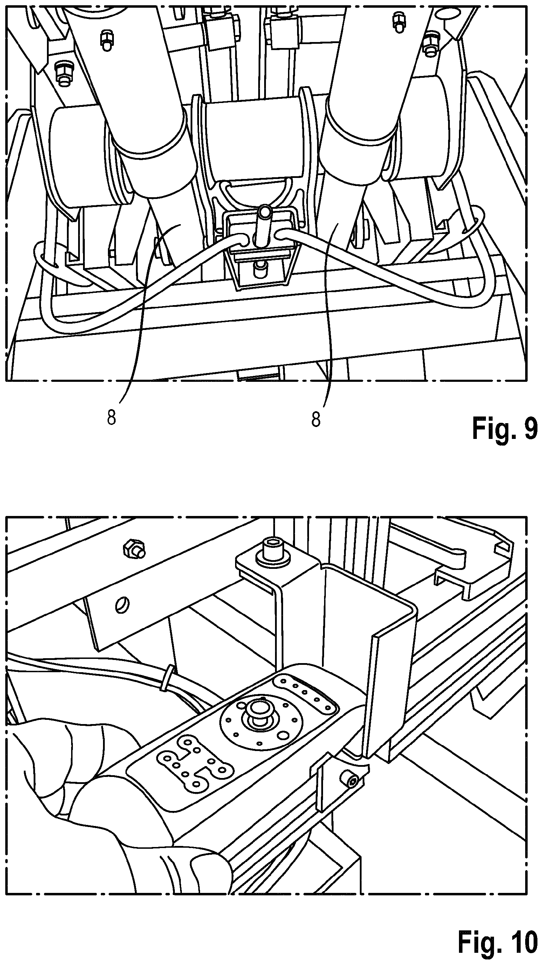

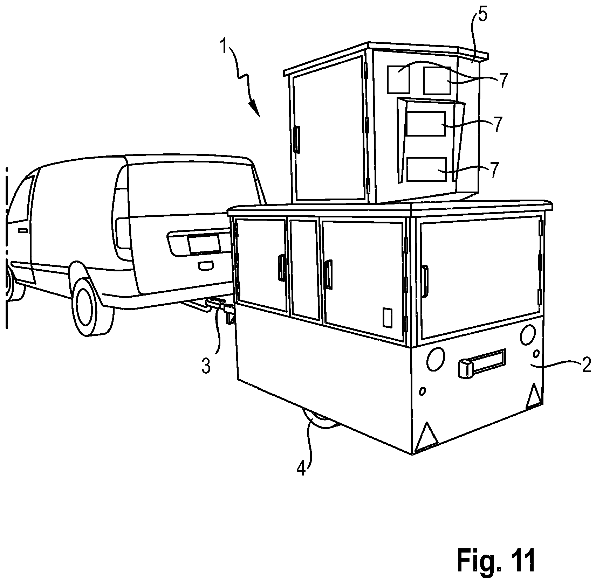

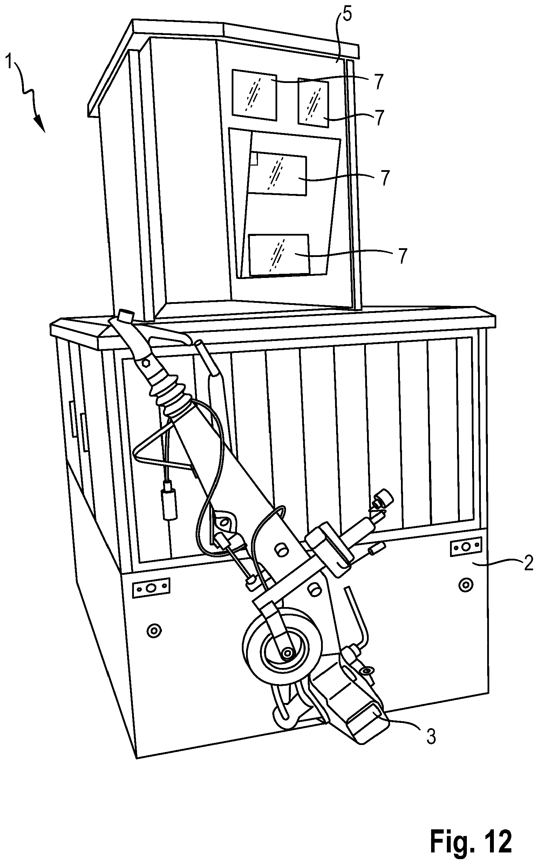

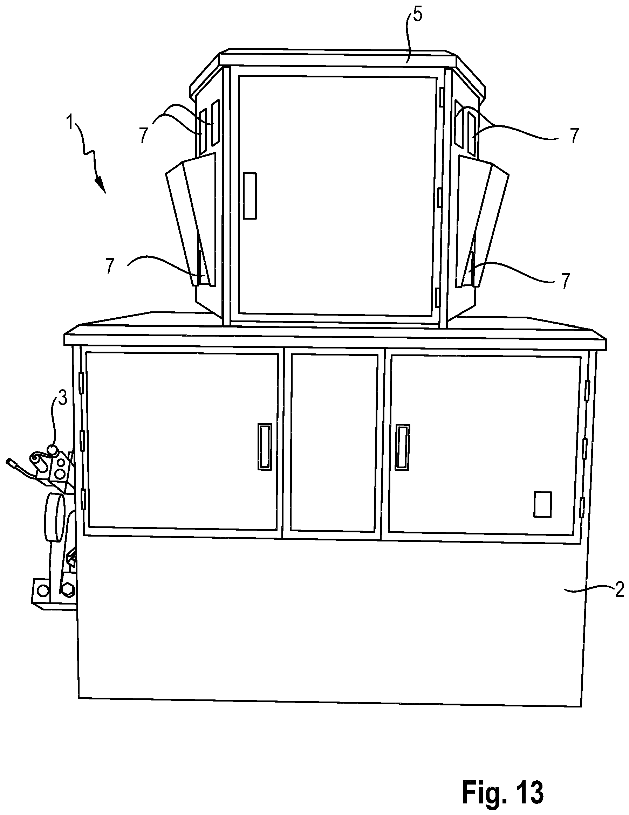

In Fig. 1 ist der Anhänger 1 mit seinen wesentlichen Bestandteilen, dem Aufbau 2, der Deichsel 3 , ein Rad 4 sowie dem Gehäuseaufsatz 5 zu erkennen. Ebenfalls dargestellt sind die Einschübe 6 mit den entsprechenden Fenstern 7 für Radarantenne bzw. Sensor, Aufnahmeeinheit und IR-Blitzeinrichtung. In den Fig. 2 bis 4 finden sich die selben Elemente wieder, nur aus einer anderen Perspektive. Fig. 5 ist der abgesetzte Zustand zu erkennen. Dies ist die sogenannte Arbeitsstellung. Die beweglich angeordnete Deichsel 3 ist hier schematisch angedeutet hochgeklappt, so dass man einfacher an sämtliche im vorderen Teil des Anhängers 1 befindlichen Einheiten herankommt. Der Anhänger 1 ist auf den Aufbau 2 abgesetzt, so dass folgerichtig keine Räder 4 mehr zu erkennen sind. Aus Fig. 7, 8 und 9 ist der Mechanismus zu erkennen, mit dem die Räder 4 hochgezogen werden können. Dazu sind zwei Arbeitszylinder 8, welche pneumatisch oder aber auch hydraulisch betrieben werden können, mit der Achse 9 derart verbunden, dass beim Einfahren der Arbeitszylinder 8 die Achse 9 gedreht wird und somit die daran befindlichen Radstellungen nach oben bewegt werden können. Fig. 10 zeigt die am Hänger installierte Fernbedienung, mit der die nicht dargestellten teleskopischen Stützfüße einzeln ansteuerbar aus- bzw. eingefahren werden können. Dies ist in zweierlei Sicht von besonderem Vorteil. Zum einen wird dabei die untere Umrandung des Aufbaus 2 entlastet, zum anderen kann damit besonders einfach der Anhänger 1 ausnivelliert werden. Mögliche Unebenheiten werden ausgeglichen und erhöhen somit ebenfalls die Standsicherheit. Fig. 11 zeigt den Anhänger 1 im fahrbereiten und an einen Kleintransporter angehängten Zustand. Auf diese Weise kann der Anhänger 1 mit seinen fest Installierten Messsystemen an jeden beliebigen Ort zur Verkehrsüberwachung gefahren werden. Fig. 12 zeigt den Einsatzzustand mit entsprechend hochgeklappter Deichsel 3 und abgesetzten Aufbau 2. Fig. 13 zeigt eine weitere Ansicht im abgesetzten Zustand. Wie insbesondere Fig. 5 deutlich zu entnehmen, sind die Einschübe 6 des Gehäuseaufsatzes 5 bezogen auf die Laufrichtung des Anhängers 1 bzw. der Richtung der Deichselachse unter einem Winkel stehend angeordnet. Somit ist eine einfache Ausrichtung der Radarantenne bzw. des Sensors gewährleistet, da der Anhänger 1 nur parallel zur überwachenden Straße aufgestellt werden muss, wobei eine ungefähre Parallelität vollkommen ausreichend ist, da die ausgesendete Radarstrahlung einen weiten Öffnungswinkel aufweist. Ein weit höherer Aufwand muss bezüglich der Aufstellung dann betrieben werden, wenn sich in den Einschüben 6 ein anderes Messsystem z. B. auf Basis eines Lasers befinden, da derartige Messsysteme im Allgemeinen keinen derartigen Öffnungswinkel aufweisen. Der Anhänger 1 ist jedoch nicht einschränkend auf die Verwendung eines Radargerätes beschränkt. Die Kombination verbindet jedoch sämtliche Vorteile der beiden Systeme.

Die Ausgestaltung des Anhängers 1 mit zwei Einschüben 6 erlaubt besonders vorteilhaft die folgenden Variationen:
Für die Geschwindigkeitsmessung wird neben dem Radargerät im selben Einschub 6 eine Kamera installiert die als Master Frontfotos erstellt. Der zweite Einschub 6 ist nicht besetzt, so dass keine Heckaufnahme erstellt werden kann. Die Überwachung nur einer Fahrtrichtung in dieser Konfiguration ist möglich. Eine weitere Ausgestaltung besteht darin, dass der zweite Einschub 6 mit einer weiteren Kamera ausgestattet ist. Diese kann dann als Slave Heckfotos liefern. Es ist weiterhin nur eine Fahrtrichtung überwachbar, wobei stets die Kameras mit einem IR-Blitz kombinierbar sind. Wird der zweite Einschub 6 ebenfalls mit ein komplettes Messsystem bestückt, ist eine Überwachung beider Fahrtrichtungen möglich.

Für die Rotlicht- und Geschwindigkeitsüberwachung ist die Bestückung eines Einschubs 6 mit einem kompletten Messsystem und die Bestückung des anderen Einschubs 6 mit einer Kamera nur sinnvoll.

### Bezugszeichenliste

- 1: Anhänger
- 2: Aufbau
- 3: Deichsel
- 4: Rad
- 5: Gehäuseaufsatz
- 6: Einschübe
- 7: Fenster für Radarantenne bzw. Sensor
- 8: Arbeitszylinder
- 9: Achse

## Patentansprüche

1. Anhänger zur Verkehrsüberwachung enthaltend einen Aufbau (2) und ein Fahrgestell mit Deichsel (3) und Achse (9) mit Rädern (4), wobei - in dem Aufbau (2) mindestens eine Anlage zur Erfassung und Dokumentation von Rotlicht- und/oder Geschwindigkeitsverstößen integrierbar angeordnet ist, **dadurch gekennzeichnet, dass**
- Mittel vorhanden sind, mit denen die Räder anheb- und absenkbar sind, so dass im abgesenkten Zustand der Anhänger fahrbereit ist und im angehobenen Zustand die Räder keinen Bodenkontakt aufweisen und somit der Anhänger über seinen Aufbau auf der Erde steht, wobei
- ein Gehäuseaufsatz (5) mit zwei Einschüben (6) am Aufbau (2) angeordnet ist, wobei mindestens ein Einschub (6) zur Aufnahme eines Radargerätes mit Radarantenne und mindestens einer Aufzeichnungseinheit konzipiert ist und wobei
- die Einschübe (6) bezüglich des Anhängers (1) nach vorn bzw. nach hinten und gegenüber der Deichsel (3) jeweils einen Winkel von kleiner 45° einschließend angeordnet sind, so dass bei Abstellung des Anhängers (1) seitlich parallel zur Straße die Radarstrahlung unter einem Winkel α der Radarachse zur Fahrbahnrichtung von ebenfalls kleiner 45° erfolgt.

2. Anhänger nach Anspruch 1, **dadurch gekennzeichnet, dass** die Deichsel (3) einklappbar angeordnet ist.

3. Anhänger nach Anspruch 1 oder 2, **dadurch gekennzeichnet, dass** im Einschub (6) die Radarantenne und die Aufzeichnungseinheit und die zur Erfassung und Dokumentation von Rotlicht- und/oder Geschwindigkeitsverstößen zugehörigen weiteren Bestandteile im Gehäuseaufsatz (5) angeordnet sind.

4. Anhänger nach Anspruch 1, **dadurch gekennzeichnet, dass** in jedem Einschub (6) ein Messsystem vorhanden ist, so dass Messungen von beiden Fahrtrichtungen durchgeführt werden können.

5. Anhänger nach Anspruch 1, **dadurch gekennzeichnet, dass** in mindestens einem Einschub (6) ein Messsystem auf Basis eines Lasers vorhanden ist.

6. Anhänger nach Anspruch 1, **dadurch gekennzeichnet, dass** in einem Einschub (6) ein komplettes Messsystem und in dem anderen Einschub (6) eine Kamera zur Aufnahme der Heckansicht eines Fahrzeugs, von dem bereits eine Frontansicht durch das komplette Messsystem generiert wurde, vorhanden sind.

7. Anhänger nach einem der vorgenannten Ansprüche, **dadurch gekennzeichnet, dass** mindestens ein Pneumatik- oder Hydraulikzylinder vorhanden ist, mittels derer die Räder (4) durch Drehung der Achse (9) anheb- und absenkbar sind.

8. Anhänger nach einem der vorgenannten Ansprüche, **dadurch gekennzeichnet, dass** teleskopierbare Stützfüße vorhanden sind, die im angehobenen Zustand der Räder (4) zur Justierung des Anhängers (1) und Entlastung des Aufbaus (2) verstellbar angeordnet sind.

## Claims

1. A trailer for monitoring traffic, comprising a structure (2) and a chassis with a drawbar (3) and an axle (9) with wheels (4), wherein at least one system for detecting and documenting red light and/or speed violations is arranged in the structure (2) in an integrable manner, **characterised in that**
- means are present for raising and lowering the wheels so that, when the wheels are lowered, the trailer is ready to move and, in the raised state, the wheels do not touch the ground and, therefore, the trailer stands on the ground via its structure, wherein
- a housing attachment (5) with two drawers (6) is arranged on the structure (2), wherein at least one drawer (6) is designed to receive a radar unit comprising a radar antenna and at least one recording unit, and wherein
- the drawers (6) are arranged to the front or to the rear with respect to the trailer (1) and so as to enclose a respective angle of less than 45° with respect to the drawbar (3), so that when parking the trailer (1) at the side of the road and parallel to the road, the radar beam also has an angle α of the radar axis of less than 45° to the direction of the roadway.

2. The trailer according to claim 1, **characterised in that** the drawbar (3) is arranged so as to be foldable.

3. The trailer according to claim 1 or 2, **characterised in that** the radar antenna and the recording unit are arranged in the drawer (6) and the respective other components for detecting and documenting red light and/or speed violations are arranged in the housing attachment (5).

4. The trailer according to claim 1, **characterised in that** each drawer (6) contains a measurement system, so that measurements can be made in both directions of travel.

5. The trailer according to claim 1, **characterised in that** at least one drawer (6) contains a laser-based measurement system.

6. The trailer according to claim 1, **characterised in that** one drawer (6) contains a complete measurement system and the other drawer (6) contains a camera for recording a rear view of a vehicle of which the entire measurement system has already generated a front view.

7. The trailer according to any one of the preceding claims, **characterised in that** at least one pneumatic or hydraulic cylinder is present for raising or lowering the wheels (4) by rotation of the axle (9).

8. The trailer according to any one of the preceding claims, **characterised in that** telescopic supporting legs are present which are adjustably arranged for adjustment of the trailer (1) and for taking the load off the structure (2) in the raised state of the wheels (4).

## Revendications

1. Remorque destinée à la surveillance du trafic, comportant une structure (2) et un chassis avec un timon (3) et un axe (9) avec des roues (4), au moins un système de détection et de documentation de non-respect de feu rouge et/ou d'excès de vitesse étant disposé dans la structure (2) de manière intégrable, **caractérisée en ce**
- **qu'**il y a des moyens pour lever et abaisser les roues de sorte qu'en état abaissé, la remorque soit prête à rouler, et en état levé, les roues n'ont aucun contact avec le sol de sorte que la remorque reste sur le sol par sa structure,
- un boîtier (5) comprenant deux tiroirs (6) étant monté sur la structure (2), au moins un des tiroirs (6) étant destiné à recevoir un radar comportant une antenne radar et au moins une unité d'enregistrement, et
- les tiroirs (6) étant respectivement disposés en avant et en arrière par rapport à la remorque (1) et chacun enfermant un angle de moins de 45° par rapport au timon (3), de sorte que, lors du stationnement de la remorque (1) parallèlement à la voie routière, le rayon radar s'étend également sous un angle α de l'axe radar de moins de 45° par rapport à la direction de la voie routière.

2. Remorque selon la revendication 1, **caractérisée en ce que** le timon (3) est escamotable.

3. Remorque selon la revendication 1 ou 2, **caractérisée en ce que** l'antenne radar et l'unité d'enregistrement sont disposés dans le tiroir (6) et les autres composants associés pour la détection et documentation de non-respect de feu rouge et/ou d'excès de vitesse sont disposés dans le boîtier (5).

4. Remorque selon la revendication 1, **caractérisée en ce qu'**il y a un système de mesure dans chacun des tiroirs (6) permettant d'effectuer des mesures de toutes les deux directions de circulation.

5. Remorque selon la revendication 1, **caractérisée en ce qu'**il y a un système de mesure à base d'un laser dans au moins un des tiroirs (6).

6. Remorque selon la revendication 1, **caractérisée en ce qu'**il y a un système de mesure entier dans l'un des tiroirs (6) et une caméra réalisant une prise de vue arrière d'un véhicule dont le système de mesure entier a déjà réalisé une prise de vue avant.

7. Remorque selon l'une quelconque des revendications précédentes, **caractérisée en ce qu'**il y a au moins un cylindre pneumatique ou hydraulique au moyen desquels les roues (4) peuvent êtres levées et abaissées par rotation de l'axe (9).

8. Remorque selon l'une quelconque des revendications précédentes, **caractérisée en ce qu'**il y a des pieds de support téléscopiques qui, en état levé des roues (4), sont disposés de manière variable afin d'ajuster la remorque (1) et soulager le poids de la structure (2).
